# EUROPÄISCHE PATENTANMELDUNG

(11) **EP 2 405 167 A2**
(43) Veröffentlichungstag der Anmeldung: **11.01.2012**
(21) Anmeldenummer: 11170346.8
(22) Anmeldetag: 17.06.2011
(51) Int. Cl.: F16K 31/06, F02B 37/16

(54) **Elektromagnetventil für eine Verbrennungskraftmaschine**

(30) Priorität: 05.07.2010 DE 102010026121
(71) Anmelder: Pierburg GmbH, 41460 Neuss (DE)
(72) Erfinder: Zurke, Janusz, 47638 Straelen (DE); Fernandes, Alvito, 51399 Burscheid (DE)
(74) Vertreter: Patentanwälte ter Smitten

(57) **Zusammenfassung**

Elektromagnetventil für eine Verbrennungskraftmaschine mit einem Gehäuse (2), einer elektromagnetischen Antriebseinheit (4), die im Gehäuse (2) angeordnet ist und einer beweglichen Ventileinheit (6), welche über die Antriebseinheit (4) bewegbar ist und welche ein Ankerelement (16) und ein mit dem Ankerelement (16) verschiebbaren Verschlusskörper (36) aufweist, wobei das Ankerelement (16) auf einer Gleitbuchse (18) befestigt ist, die verschiebbar auf einem Führungsbolzen (20) gelagert ist, sind bekannt.

Die Befestigung des Verschlusskörpers erfordert häufig zusätzliche Bearbeitungsschritte oder Materialien.

Um dies zu vermeiden wird vorgeschlagen, dass das Ankerelement (16) mit dem Verschlusskörper (36) über die Gleitbuchse (18) verbunden ist.

## Beschreibung

Die Erfindung betrifft ein Elektromagnetventil für Verbrennungskraftmaschinen mit einem Gehäuse, einer elektromagnetischen Antriebseinheit, die im Gehäuse angeordnet ist und einer beweglichen Ventileinheit, welche über die Antriebseinheit bewegbar ist und welche ein Ankerelement und ein mit dem Ankerelement verschiebbaren Verschlusskörper aufweist, wobei das Ankerelement auf einer Gleitbuchse befestigt ist, die verschiebbar auf einem Führungsbolzen gelagert ist.

Derartige Elektromagnetventile sind bekannt. Sie dienen zur Regelung eines freien durchströmbaren Querschnittes eines Kanals durch Abheben und Absenken des Verschlusskörpers auf einen Ventilsitz durch Betätigen der elektromagnetischen Antriebseinheit. Eine bekannte Verwendung eines solchen Ventils ist die als chubumluftventil in einer aufgeladenen Verbrennungskraftmaschine. Dabei wird in bekannter Weise vom Schubumluftventil der Querschnitt eines Bypasskanals beherrscht, der die Druckseite eines Verdichters eines Turboladers mit der Saugseite verbindet.

Ein derartiges Bypassventil wird in der DE 10 2008 031 738 A1 beschrieben. Auf einem in einem Kern des Elektromagneten befestigten Führungsbolzen des Schubumluftventils ist eine Gleitbuchse angeordnet, auf der ein Ankerelement gleitverschieblich angeordnet ist. Dieses Ankerelement, welches aus einem magnetisierbaren Material, insbesondere Metall, hergestellt werden muss, und mittels Verpressen mit der Gleitbuchse verbunden ist, weist eine aufwendige Formgebung auf, um an einem Kugelkopf dieses Elementes mittels einer Klipsverbindung den Verschlusskörper befestigen zu können, Es ist somit notwendig, das Ankerelement spanend nachzubearbeiten. Des Weiteren ist die Verstellung des Rohlings für das Ankerelement aufgrund der schwierigen Ausgangsformgebung bereits aufwendig.

Alternativ ist es bekannt, den Verschlusskörper mit dem Ankerelement durch Schernieten mittels einer Scheibe zu verbinden. Dies vereinfacht zwar die Herstellung des Ankerelementes, allerdings wird hierdurch die Montage erschwert.

Es stellt sich daher die Aufgabe, ein Elektromagnetventil bereit zu stellen, bei dem eine Verbindung zwischen dem Ankerelement und dem Verschlusskörper auf möglichst einfache Weise, ohne zusätzliche Bauteile verwenden zu müssen, hergestellt werden kann. Dabei sollen Herstellungs- und Montageschritte im Vergleich zu bekannten Ausführungen eingespart werden.

Diese Aufgabe wird durch den kennzeichnenden Teil des Hauptanspruchs gelöst.

Dadurch, dass das Ankerelement mit dem Verschlusskörper über die Gleitbuchse verbunden ist, werden keine zusätzlichen Verbindungselemente benötigt. Hierdurch können die Herstellkosten reduziert werden.

Vorzugsweise ist das Ankerelement fest mit der Gleitbuchse verbunden und der Verschlusskörper formschlüssig zwischen dem Ankerelement und einem Ende der Gleitbuchse gehalten. Eine derartige formschlüssige Verbindung ist besonders einfach herzustellen.

In einer vorteilhaften Ausführungsform ragt die Gleitbuchse durch eine Öffnung in den Verschlusskörper, wobei die Gleitbuchse am durch die Öffnung ragenden Ende einen Durchmesser aufweist, der größer ist als der Durchmesser der Öffnung. Somit kann der Verschiusskörper sich nicht von dem Ankerelement lösen, ohne dass hierzu Befestigungsmittel benutzt werden müssen. Es ist lediglich eine einfach herzustellende Ausformung der Gleitbuchse notwendig. Gleichzeitig kann die Form des Ankerelementes besonders einfach gewählt werden, so dass eine Nachbearbeitung zur Befestigung des Verschlusskörpers entfällt.

In einer hierzu weiterführenden Ausgestaltung der Erfindung liegt der die Öffnung radial begrenzende Bereich des Verschlusskörpers an seinem ersten axialen Ende gegen eine Anschlagfläche des Ankerelementes an und an seinem entgegengesetzten Ende gegen einen Kragen der Gleitbuchse an. Somit wird eine feste Verbindung des Verschlusskörpers geschaffen, so dass dieser sich in beiden Bewegungsrichtungen vollstandig mit dem Ankerelement bewegt.

Vorzugsweise ist der Kragen der Gleitbuchse durch Bördeln oder Taumelnieten hergestellt. Dieser Herstellprozess ist besonders kostengünstig durchführbar.

Des Weiteren wird vorzugsweise die Verbindung zwischen dem Ankerelement und der Gleitbuchse durch Einpressen der Gleitbuchse hergestellt. Auch hierzu werden keine weiteren Bauteile verwendet. Das Verfahren ist ebenfalls kostengünstig durchführbar.

Es wird somit ein Elektromagnetventil geschaffen, welches im Vergleich zu bekannten Ausführungen einfacher und kostengünstiger hergestellt werden kann, da Herstellungsprozesse optimiert und die Bauteileanzahl reduziert werden.

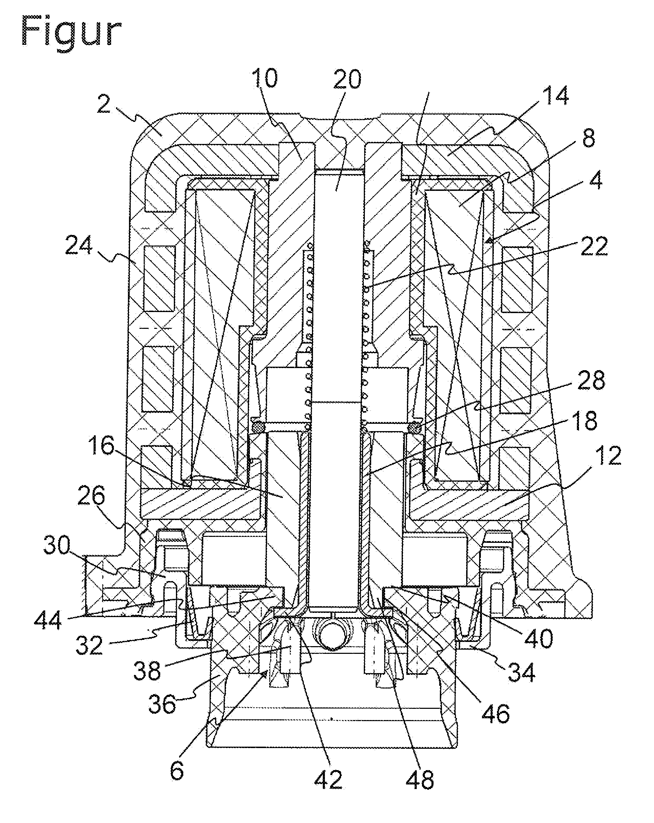

Ein Ausführungsbeispiel eines erfindungsgemäßen Elektromagnetventils in Form eines Schubumluftventils ist in der Figur dargestellt und wird nachfolgend beschrieben.

Die Figur zeigt eine Seitenansicht eines erfindungsgemäßen Elektromagnetventils in geschnittener Darstellung.

Das erfindungsgemäße Elektromagnetventil besteht aus einer einem dreiteiligen Gehäuse 2, in dem eine elektromagnetische Antriebseinheit 4 sowie eine mittels der Antriebseinheit bewegbare Ventileinheit 6 angeordnet sind.

Die elektromagnetische Antriebseinheit 4 weist einen elektromagnetischen Kreis bestehend aus einer Spule 8, einem Kern 10, einem Rückschlussblech 12, einem Joch 14 sowie einem Ankerelement 16 auf. Durch Bestromen der Spule 8 wird über das Joch 14, das Rückschlussblech 12, den Kern 10 und das Ankerelement 16 ein elektromagnetisches Feld erzeugt, dessen Feldlinien lediglich in einem Spalt zwischen dem Ankerelement 16 und dem Kern 10 unterbrochen sind, so dass eine magnetische Kraft zwischen Ankerelement 16 und Kern 10 entsteht, welche das Ankerelement 16 in Richtung zum Kern 10 zieht.

Das Ankerelement 16 ist im Wesentlichen hohlzylindrisch ausgeführt und gleitet bei Betätigung der elektromagnetischen Antriebseinheit 4 mit einer im radial Innern des Ankerelementes 16 angeordneten Gleitbuchse 18 auf einem Führungsbolzen 20, der fest zentrisch im Kern 10 befestigt ist und sich in Richtung der Ventileinheit 6 erstreckt. Die Gleitbuchse 18 ist durch Einpressen in das Ankerelement 16 fest mit diesem verbunden. Um den Führungsbolzen 20 herum ist eine Schraubenfeder 22 angeordnet, die sich mit ihrem ersten axialen Ende gegen einen Absatz 24 des Kerns 10 und mit ihrem entgegengesetzten zweiten axialen Ende gegen die Gleitbuchse 18 oder das Ankerelement 16 abstützt, wodurch das Ankerelement 16 im unbestromten Zustand der Spule 8 durch die Federkraft in eine vom Kern 10 weg weisende Richtung belastet wird.

Das dreiteilige Gehause 2 besteht aus einem ersten Gehäuseteil 24, welches die Spule 8 und das Joch 14 umgibt, sowie einem zweiten Gehäuseteil 26, welches das Gehäuse 2 von der zum Kern 10 entgegengesetzten Seite weitestgehend verschließt und im radial Innern des ersten Gehäuseteils 24 angeordnet ist. Das zweite Gehäuseteil 26 liegt gegen das Rückschlussblech 12 an und erstreckt sich entlang des Ankerelementes 16 in Richtung zum Kern 10, wobei zwischen dem zweiten Gehäuseteil 26 und dem Kern 10 ein O-Ring 28 angeordnet ist, welcher ein Eindringen von Gas in den Bereich der Spule 8 verhindert. Ein drittes Gehäuseteil 30 ist wiederum von der zum Kern 10 entgegengesetzten Seite in das zweite Gehäuseteil 26 geschoben und dort beispielsweise durch Klipsen befestigt. In diesem dritten Gehäuseteil 30 ist ein Radialdichtring 32 angeordnet, der auf einer das Gehäuseteil 30 axial begrenzenden Einschnürung 34 aufliegt und mit seinem Außenumfang gegen das dritte Gehäuseteil 30 anliegt und mit seinem Innenumfang gegen einen radial innenliegenden Verschlusskörper 36 der Ventileinheit 6 anliegt, so dass dieser im geschlossenen Zustand des Elektromagnetventils ein Eindringen von Gas zwischen dem Verschlusskörper 36 und dem dritten Gehäuseteil 30 verhindert.

Die bewegliche Ventileinheit 6 besteht aus dem Ankerelement 16, der Gleitbuchse 18 und dem runden Verschlusskörper 36, in dem Druckausgleichsöffnungen 38 ausgebildet sind, die dafür sorgen, dass die bewegliche Ventileinheit 6 bezüglich der auf sie wirkenden pneumatischen Kräfte druckausgeglichen ist, da unterhalb des Verschlusskörpers 36 jeweils der gleiche Druck anliegt wie oberhalb des Verschlusskörpers 36. Hierzu ist es notwendig, ein Eindringen von Gas vom Seitenbereich des Verschlusskörpers 36 in das Innere des Elektromagnetventils über den Radialdichtring zu verhindern.

Um den freien Durchströmungsquerschnitt des beherrschten Kanals zu regeln, ist es somit erforderlich, den Verschlusskörper 36 in seiner Bewegung mit dem Ankerefement 16 zu koppeln. Dies wird erreicht, indem zunächst der Verschlusskörper 36 axial gegen eine Anschlagfläche 40 des Ankerelementes 16 geschoben wird und anschließend ein axiales Ende der Gleitbuchse 18 derart umgeformt wird, dass dieses Ende in Form eines Kragens 42 von der entgegengesetzten Seite gegen einen eine Öffnung 46 im Verschlusskörper 36 radial begrenzenden Bereich 44 des Verschlusskörpers 36 anliegt, durch die im vorliegenden Ausführungsbeispiel sowohl ein Absatz 48 des Ankerelementes 16 als auch der Kragen 42 der Gleitbuchse 18 und der Führungsbolzen 20 ragen. Der Kragen 42 wird durch Bördeln oder Taumelnieten erzeugt. Der die Öffnung 46 umgebende Bereich 44 liegt somit mit seinem ersten axialen Ende gegen die Anschlagfläche 40, von der aus sich der Absatz 48 in die Öffnung 46 erstreckt, an und mit seinem zweiten axialen Ende gegen den Kragen 42 an, wodurch eine axial feststehende Verbindung zwischen dem Verschiusskörper 36, dem Ankerelement 16 und der Gleitbuchse 18 hergestellt wird.

Bei Betätigung des elektromagnetischen Kreises durch Bestromen der Spule 8 wird somit das Ankerelement 16 mit der daran befestigten Gleitbuchse 18 zum Kern 10 gezogen. Durch den Kragen 42 des Ankerelementes wird auch der Verschlusskörper in Richtung des Kerns bewegt und hebt sich somit von einem nicht dargestellten Ventilsitz zur Freigabe eines Durchströmungsquerschnitts.

Es wird deutlich, dass das beschriebene erfindungsgemäße Elektromagnetventil besonders einfach und kostengünstig herstellbar ist. Zur Befestigung der verschiedenen Bauteile der Ventileinheit 6 aneinander werden keine Befestigungsmittel benötigt. Entsprechend sinkt die Anzahl der Bauteile. Zusätzlich werden lediglich einfache Umformverfahren verwendet.

Es wird darauf hingewiesen, dass die Erfindung nicht auf das beschriebene Ausführungsbeispiel beschränkt ist, sondern verschiedene andere Verbindungsformen zwischen dem Verschlusskörper und dem Ankerelement über die Gleitbuchse denkbar sind, ohne den Schutzbereich des Hauptanspruchs zu verlassen. Selbstverständlich ist eine solche Verbindung auch für andere Elektromagnetventile als das beschriebene Schubumluftventil einsetzbar.

## Patentansprüche

1. Elektromagnetventil für eine Verbrennungskraftmaschine mit einem Gehäuse (2),
einer elektromagnetischen Antriebseinheit (4), die im Gehäuse (2) angeordnet ist und
einer beweglichen Ventileinheit (6), welche über die Antriebseinheit (4) bewegbar ist und welche ein Ankerelement (16) und ein mit dem Ankerelement (16) verschiebbaren Verschlusskörper (36) aufweist, wobei das Ankerelement (16) auf einer Gleitbuchse (18) befestigt ist, die verschiebbar auf einem Führungsbolzen (20) gelagert ist,
**dadurch gekennzeichnet, dass**
das Ankerelement (16) mit dem Verschlusskörper (36) über die Gleitbuchse (18) verbunden ist.

2. Elektromagnetventil für eine Verbrennungskraftmaschine nach Anspruch 1,
**dadurch gekennzeichnet, dass**
das Ankerelement (16) fest mit der Gleitbuchse (18) verbunden ist und der Verschlusskörper (36) formschlüssig zwischen dem Ankerelement (16) und einem axialen Ende der Gleitbuchse (18) gehalten ist.

3. Elektromagnetventil für eine Verbrennungskraftmaschine nach einem der vorhergehenden Ansprüche,
**dadurch gekennzeichnet, dass**
die Gleitbuchse (18) durch eine Öffnung (46) in den Verschlusskörper (36) ragt, wobei die Gleitbuchse (18) am durch die Öffnung (46) ragenden axialen Ende einen Durchmesser aufweist, der größer ist als der Durchmesser der Öffnung (46).

4. Elektromagnetventil für eine Verbrennungskraftmaschine nach Anspruch 3,
**dadurch gekennzeichnet, dass**
der die Öffnung (46) radial begrenzende Bereich (44) des Verschlusskörpers (36) an seinem ersten axialen Ende gegen eine Anschlagfläche (40) des Ankerelementes (16) anliegt und an seinem entgegengesetzten Ende gegen einen Kragen (42) der Gleitbuchse (18) anliegt.

5. Elektromagnetventil für eine Verbrennungskraftmaschine nach Anspruch 4,
**dadurch gekennzeichnet, dass**
der Kragen (42) der Gleitbuchse (18) durch Bördeln oder Taumehteten hergestellt ist.

6. Elektromagnetventil für eine Verbrennungskraftmaschine nach Anspruch 2,
**dadurch gekennzeichnet, dass**
die Verbindung zwischen Ankerefement (16) und Gleitbuchse (18) durch Einpressen der Gleitbuchse (18) hergestellt ist.
